# EUROPÄISCHE PATENTSCHRIFT

(11) **EP 0 477 604 B1**
(45) Veröffentlichungstag und Bekanntmachung des Hinweises auf die Patenterteilung: **15.11.1995**
(21) Anmeldenummer: 91114859.1
(22) Anmeldetag: 03.09.1991
(51) Int. Cl.: G02F 1/313, G02F 1/015

(54) **Steuerbarer integriert optischer Richtkoppler**
Controllable integrated optical directional coupler
Coupleur optique directionnel intégré, commandable

(30) Priorität: 28.09.1990 DE 4030754
(43) Veröffentlichungstag der Anmeldung: 01.04.1992
(73) Patentinhaber: SIEMENS AKTIENGESELLSCHAFT, 80333 München (DE)
(72) Erfinder: Müller, Gustav, Dr., W-8000 München 50 (DE); Stoll, Lothar, Dipl.-Ing., W-8000 München 70 (DE)

(56) Entgegenhaltungen:
- EP-A- 0 415 225
- US-A- 4 728 167
- ELECTRONICS LETTERS. Bd. 26, Nr. 2, 18. Januar 1990, STEVENAGE GB Seiten 115 - 117; G.MÜLLER ET AL.: 'Low current plasma effect optical switch on InP'
- ITG-FACHBERICHTE Bd. 112, 1990, DE Seiten 151 - 157; G.MÜLLER ET AL.: 'Dämpfungsarme optische InP/InGaAsP Schalter für die integrierte Optik'
- IEEE PHOTONICS/TECHNOLOGY LETTERS Bd. 1, Nr. 3, März 1989, NEW YORK, US Seiten 65 - 67; W.K.CHAN ET AL.: 'Integration of High-Speed Optical Taps with InP Waveguides'

## Beschreibung

Die Erfindung betrifft einen steuerbaren optischen Richtkoppler nach dem Oberbegriff des Patentanspruchs 1 und wie er in der nicht vorveröffuntlichten deutschen Patentanmeldung P 3929131.6 (GR 89 P 1730 DE) und in Electronics Letters, Vol. 26, No. 2, S. 115-117 vorgeschlagen ist.

Bei dem vorgeschlagenen Richtkoppler erstreckt sich der pn- oder pin- Übergang über die ganze Länge der als Rippenwellenleiter ausgebildeten beiden Streifenwellenleiter. Diese Streifenwellenleiter weisen somit eine einheitliche Wellenleiterstruktur auf, wobei der pn- oder pin- Übergang nur im Koppelabschnitt über elektrische Kontakte elektrisch steuerbar ist.

Dieser Richtkoppler ist als optischer Schalter betreibbar, der ein optisches Eingangssignal in Abhängigkeit von einem elektrischen Steuersignal dem einen oder anderen Ausgang des Schalters zuführt.

Bei dem vorgeschlagenen Richtkoppler hängt die Funktion dieses Bauelements im allgemeinen von der Polarisation des Eingangssignals ab, d.h. bei gegebener Geometrie werden TE-polarisierte Eingangssignale anders auf die Ausgänge verteilt, als TM-polarisierte Eingangssignale.

Aufgabe der Erfindung ist es, einen Richtkoppler der genannten Art dahingehend zu verbessern, daß eine weitgehend polarisationsunabhängige Funktion dieses Kopplers und eines damit realisierten optischen Schalters gewährleistet ist.

Diese Aufgabe wird durch die im kennzeichnenden Teil des Patentanspruchs 1 angegebenen Merkmale gelöst.

Besonders vorteilhafte Ausgestaltungen des erfindungsgemäßen Richtkopplers gehen aus den Unteransprüchen hervor. Insbesondere haben die Streifenwellenleiterstrukturen der passiven Streifenwellenleiter den Vorteil, daß sie sich zur Integration mit der in der älteren deutschen Patentanmeldung P 40 14 234.5 (GR 90 P 1231 DE) beschriebenen Laserdiode eignen. Sie können über dies in einfacher Weise aus der Streifenwellenleiterstruktur des elektrisch steuerbaren Streifenwellenleiters durch Weglassen oder Abätzen oberer Schichten hergestellt werden.

Die Erfindung wird anhand der Figuren in der nachfolgenden Beschreibung beispielhaft näher erläutert. Es zeigen:
- Figur 1: eine Draufsicht auf einen beispielhaften erfindungsgemäßen Richtkoppler,
- Figur 2: einen längs der Schnittlinie II-II in Figur 1 geführten Schnitt durch den elektrisch steuerbaren Streifenwellenleiter im Kopplerabschnitt, und
- Figuren 3a bis 3d: jeweils einen beispielsweise längs der Schnittlinie III-III in Figur 1 geführten Querschnitt durch einen passiven Streifenwellenleiter des erfindungsgemäßen Richtkopplers, wobei verschiedene mögliche Streifenwellenleiterstrukturen für einen solchen passiven Streifenwellenleiter dargestellt sind.

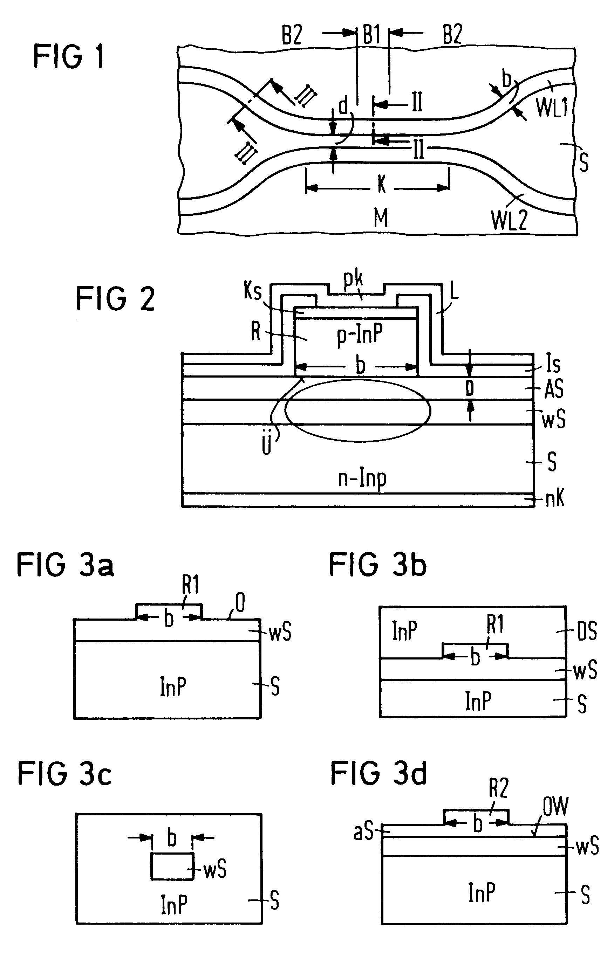

Bei dem Richtkoppler nach Figur 1 sind die auf dem Substrat S integrierten Streifenwellenleiter WL1 und WL2 definierter Breite b im Koppelabschnitt K in dem geringen Abstand d nebeneinander geführt, der so klein ist, daß in diesem Koppelabschnitt K eine in der wellenleitenden Schicht eines Streifenwellenleiters WL1 oder WL2 geführte optische Welle in die wellenleitende Schicht des anderen Streifenwellenleiters WL2 bzw. WL1 überkoppelt.

Der den elektrisch steuerbaren Streifenwellenleiter bildende Streifenwellenleiterabschnitt eines Steifenwellenleiters WL1 oder WL2 befindet sich im Phasenschieberabschnitt Ph und erstreckt sich beispielsweise über den Bereich B1. Außerhalb des Bereiches B1, d.h. im Bereich B2 links und rechts vom Bereich B1 sind die Streifenwellenleiter WL1 und WL2 passive Streifenwellenleiter.

Der Bereich B1 könnte auch in zwei Bereichshälften aufgespalten sein, von denen sich eine links und die andere rechts von der Mitte M des Koppelabschnitts befindet, wobei die beiden Bereichshälften den gleichen Abstand von der Mitte haben. In diesem Fall sind die in die Bereichshälften fallenden Streifenwellenleiterabschnitte steuerbare Streifenwellenleiter, während der zwischen diese Bereichshälften fallende Streifenwellenleiterabschnitt und die links und rechts von diesen Bereichshälften angeordneten Streifenwellenleiterabschnitte passive Streifenwellenleiter sind.

Die Streifenwellenleiterstruktur des steuerbaren Streifenwellenleiters ist in der Figur 2 im Querschnitt dargestellt. Nach dieser Struktur ist auf einem Substrat S eine wellenleitende Schicht wS aufgebracht. Auf der wellenleitenden Schicht wS befindet sich eine Abstandsschicht AS der Dicke D, auf der wiederum die Rippe R aufgebracht ist, deren Breite b die Breite des Streifenwellenleiters definiert.

Das Substrat S besteht aus n-dotiertem Halbleitermaterial. Ebenso besteht die wellenleitende Schicht wS aus n-dotiertem Halbleitermaterial, wobei Material und/oder Dotierung dieser wellenleitenden Schicht wS so gewählt sind, daß ihre Brechzahl größer als die des Substrats S ist.

Die Abstandsschicht AS besteht aus n-dotiertem oder undotiertem Halbleitermaterial, das so gewählt ist, daß seine Brechzahl kleiner als die der wellenleitenden Schicht S ist.

Die Rippe R besteht aus p-dotiertem Halbleitermaterial.

Durch das n-dotierte Material des Substrats S und der wellenleitenden Schicht wS, das undotierte Material der Abstandsschicht AS und das p-dotierte Material der Rippe R ist ein pn-oder pin-Übergang definiert, bei dem der Übergang Ü von p-dotierten Material in Richtung zum n-dotierten oder undotierten Material im Abstand D von der wellenleitenden Schicht wS angeordnet ist.

Unter der Oberfläche der Rippe R befindet sich eine hoch p-dotierte Kontaktschicht, die mit einem metallischen Kontakt pK kontaktiert ist. Zu diesem Kontakt pK führende elektrische Leitungen L sind auf einer elektrisch isolierernden Schicht IS, beispielsweise einer Oxidschicht, zugeführt, die diese Leitungen L von der Abstandsschicht AS und der Rippe R trennt.

Der Gegenkontakt zum Kontakt pK ist auf der Unterseite des Substrats S aufgebracht und mit nK bezeichnet.

Das Substrat S und die Rippe R bestehen beispielsweise aus InP, während die wellenleitende Schicht wS und die Abstandsschicht AS aus InGaAsP bestehen, wobei das Material der Abstandsschicht AS eine Gap-Wellenlänge von 1,1 µm und das Material der wellenleitenden Schicht wS eine Gap-Wellenlänge von 1,25 µm haben können.

Die pn-oder pin- übergangsfreie Streifenwellenleiterstruktur der passiven Streifenwellenleiter kann verschieden aufgebaut sein.

Bei den Ausführungsformen nach Figur 3a und 3b ist diese Struktur durch eine einen dickeren Bereich der wellenleitenden Schicht wS aus dem n-dotierten oder undotierten Halbleitermaterial bildende Rippe R1, deren Breite b die Breite des passiven Streifenwellenleiters WL1 oder WL2 bestimmt, definiert, wobei die wellenleitende Schicht wS auf der vom Substrat S abgekehrten Oberseite O an Luft oder ein anderes einheitliches Material, beispielsweise das Material des Substrats S grenzt.

Bei der Ausführungsform nach Figur 3 b weist die Struktur eine streifenförmige wellenleitende Schicht wS auf, deren Breite b die Breite des passiven Streifenwellenleiters definiert, wobei diese streifenförmige wellenleitende Schicht wS vom einheitlichen Material des Substrats umgeben ist. Es kann aber auch so eingerichtet sein, daß beispielsweise die streifenförmige wellenleitende Schicht wS auf der Oberfläche des Substrats S ausgebildet und von einer Deckschicht aus einem einheitlichen Material abgedeckt ist oder frei bleibt. In diesem Fall grenzt an diese streifenförmige wellenleitende Schicht wS und das Substrat S Luft oder das andere einheitliche Material.

Bei der Ausführungsform nach Figur 3d ist die pn-und pin-übergangsfreie Streifenwellenleiterstruktur durch eine einen dickeren Bereich einer auf oder über der wellenleitenden Schicht wS angeordneten weiteren Schicht aS aus einem einheitlichen Material bildende Rippe R2, deren Breite b die Breite des passiven Streifenwellenleiters WL1, WL2 bestimmt, definiert, wobei die weitere Schicht aS auf einer von der wellenleitenden Schicht wS abgekehrten Oberseite OW an Luft oder ein anderes einheitliches Material grenzt.

Der erfindungsgemäße Richtkoppler kann vorteilhafterweise so hergestellt werden, daß zunächst das Substrat S mit der wellenleitenden Schicht wS, der Abstandsschicht AS und der darauf angeordneten Rippe R in herkömmlicher Technologie hergestellt werden. Im Bereich B1 bleibt die Rippe R bestehen, wobei dort auch die Isolierschicht IS, der Kontakt pK und die elektrischen Leitungen L in herkömmlicher Technologie realisiert werden.

Im Bereich B2 wird zumindest die Rippe R entfernt, beispielsweise durch Ätzen. Es kann auch so vorgegangen werden, daß im Bereich B1 zwei keine Rippe R erzeugt wird, d.h., diese Rippe R in diesem Bereich B2 von vorneherein weggelassen wird.

Zur Herstellung der Streifenwellenleiterstrukturen nach den Figuren 3a bis 3c wird im Bereich B2 die Abstandsschicht AS entfernt, beispielsweise durch Ätzen. Es kann auch hier so vorgegangen werden, daß diese Abstandsschicht AS im Bereich B2 nicht erzeugt, d.h. von vorneherein weggelassen wird.

Die Rippe R1 der wellenleitenden Schicht WS wird durch dünner Ätzen dieser wellenleitenden Schicht wS außerhalb des Bereichs der Rippe R1 erzeugt.

Im Falle der Figur 3b wird nach dem Erzeugen der Rippe R1 eine Deckschicht DS auf die wellenleitende Schicht wS aufgebracht, beispielsweise durch Epitaxie. Diese Deckschicht DS kann beispielsweise aus dem gleichen Material wie das Substrat S bestehen.

Bei der Ausführungsform nach Figur 3c kann so vorgegangen werden, daß die flächige wellenleitende Schicht wS bis auf einen Streifen der Breite b abgeätzt wird. Es kann auch so vorgegangen werden, daß von vorneherein nur eine streifenförmige wellenleitende Schicht der Breite b erzeugt und damit die wellenleitende Schicht außerhalb dieses Streifens von vorneherein weggelassen wird. Die hergestellte streifenförmige wellenleitende Schicht wS wird mit einer Deckschicht abgedeckt, die beispielsweise aus dem Material des Substrats S bestehen und epitaktisch hergestellt werden kann. In der Figur 3c ist angenommen, daß Deckschicht und Substrat S aus dem gleichen Material bestehen, wobei die Grenze zwischen Deckschicht und Substrat fortgelassen ist. Die Deckschicht kann auch fortgelassen sein, so daß die streifenförmige wellenleitende Schicht wS dann oberhalb des Substats S an Luft grenzt.

Die Ausführungsform nach Figur 3d wird beispielsweise so hergestellt, daß die Abstandsschicht AS außerhalb des Bereichs der Rippe R dünner geätzt wird, wobei diese Schicht AS die weitere Schicht aS bildet.

## Patentansprüche

1. Steuerbarer integriert-optischer Richtkoppler aus zwei auf einem Substrat (S) aus Halbleitermaterial integrierten, durch eine undotierte oder n-dotierte wellenleitende Schicht (wS) des Substrats (S) definierte Streifenwellenleiter (WL1, WL2) definierter Breite (b), die in einem Koppelabschnitt (K) in einem derart geringen Abstand (d) nebeneinander verlaufen, daß in diesem Koppelabschnitt (K) eine in der wellenleitenden Schicht (wS) eines der Streifenwellenleiter (WL1) geführte optische Welle in die wellenleitende Schicht (wS) des anderen Streifenwellenleiters (WL2 bzw. WL1) überkoppeln kann, wobei im Koppelabschnitt (K) zumindest einer der Streifenwellenleiter (WL1, WL2) eine über der wellenleitenden Schicht (wS) angeordnete und seine Breite (b) definierende Rippe (R) aus dem Halbleitermaterial aufweist, wobei innerhalb des Koppelabschnitts (K) im Bereich der Rippe (R) ober- oder unterhalb der wellenleitenden Schicht (wS) ein über Kontakte elektrisch steuerbarer pn- oder pin-Übergang derart integriert ist, daß der Übergang (Ü) vom p-dotierten Material in Richtung zum n-dotierten oder undotierten Material in einem Abstand (D) von der wellenleitenden Schicht (wS) angeordnet ist und sich das p-dotierte Material auf der von dieser Schicht (wS) abgekehrten Seite dieses Übergangs (Ü) befindet, wobei jeder der einen elektrisch steuerbaren pn-oder pin-Übergang aufweisenden Streifenwellenleiterabschnitte (in B1) einen elektrisch steuerbaren Streifenwellenleiter bildet und jeder außerhalb des elektrisch steuerbaren Streifenwellenleiters befindlicher Streifenwellenleiterabschnitt (in B2) oder Streifenwellenleiter einen passiven Streifenwellenleiter bildet,
dadurch **gekennzeichnet,**
daß der pn- oder pin- Übergang auf den elektrisch steuerbaren Streifenwellenleiter beschränkt ist, so daß ein passiver Streifenwellenleiter eine pn-und pin-übergangsfreie Streifenwellenleiterstruktur aufweist.

2. Richtkoppler nach Anspruch 1,
dadurch **gekennzeichnet,**
daß eine pn- und pin- übergangsfreie Streifenwellenleiterstruktur durch eine einen dickeren Bereich der wellenleitenden Schicht (wS) aus dem n-dotierten oder undotierten Halbleitermaterial bildende Rippe (R1), deren Breite (b) die Breite des passiven Streifenwellenleiters (WL1, WL2) bestimmt, definiert, wobei die wellenleitende Schicht (wS) auf einer vom Substrat (S) abgekehrten Seite (O) an Luft oder ein anderes einheitliches Material grenzt.

3. Richtkoppler nach Anspruch 1,
dadurch **gekennzeichnet,**
daß eine pn-und pin- übergangsfreie Streifenwellenleiterstruktur eine streifenförmige wellenleitende Schicht (wS), deren Breite (b) die Breite des passiven Streifenwellenleiters definiert, aufweist, wobei diese streifenförmige wellenleitende Schicht (wS) vom einheitlichen Material des Substrats (S) umgeben ist oder an diese streifenförmige wellenleitende Schicht (wS) und das Substrat (S) Luft oder ein anderes einheitliches Material grenzt.

4. Richtkoppler nach Anspruch 1,
dadurch **gekennzeichnet,**
daß eine pn- und pin- übergangsfreie Streifenwellenleiterstruktur durch eine einen dickeren Bereich einer auf oder über der wellenleitenden Schicht (wS) angeordneten weiteren Schicht (aS) aus einem einheitlichen Material bildende Rippe (R2), deren Breite (b) die Breite des passiven Streifenwellenleiters bestimmt, definiert, wobei die weitere Schicht (aS) auf einer von der wellenleitenden Schicht (wS) abgekehrten Oberseite (OW) an Luft oder ein anderes einheitliches Material grenzt.

## Claims

1. Controllable integrated optical directional coupler comprising two strip waveguides (WL1, WL2) of defined width (b), which are integrated on a substrate (S) made of semiconductor material, are defined by an undoped or n-doped waveguiding layer (wS) of the substrate (S) and extend alongside one another in a coupling section (K) at such a small spacing (d) that in this coupling section (K) an optical wave guided in the waveguiding layer (wS) of one of the strip waveguides (WL1) can couple over into the waveguiding layer (wS) of the other strip waveguide (WL2 or WL1), in the coupling section (K) at least one of the strip waveguides (WL1, WL2) having a rib (R), which is made of the semiconductor material, is arranged above the waveguiding layer (wS) and defines the width (b) of the said strip waveguide, a pn or pin junction which is electrically controllable via contacts being integrated within the coupling section (K) in the region of the rib (R) above or below the waveguiding layer (wS) in such a way that the transition (Ü) from the p-doped material in the direction of the n-doped or undoped material is arranged at a spacing (D) from the waveguiding layer (wS) and the p-doped material is situated on that side of this transition (Ü) which faces away from this layer (wS), each of the strip waveguide sections (in B1) which have an electrically controllable pn or pin junction forming an electrically controllable strip waveguide and each strip waveguide or strip waveguide section (in B2) situated outside the electrically controllable strip waveguide forming a passive strip waveguide, characterized in that the pn or pin junction is restricted to the electrically controllable strip waveguide, with the result that a passive strip waveguide has a strip waveguide structure which is free from pn and pin junctions.

2. Directional coupler according to Claim 1, characterized in that a strip waveguide structure which is free from pn and pin junctions is defined by a rib (R1) which forms a thicker region of the waveguiding layer (wS) made of the n-doped or undoped semiconductor material, the width (b) of which rib determines the width of the passive strip waveguide (WL1, WL2), the waveguiding layer (wS) bordering on air or another uniform material at a side (O) facing away from the substrate (S).

3. Directional coupler according to Claim 1, characterized in that a strip waveguide structure which is free from pn and pin junctions has a waveguiding layer (wS) which is in the form of a strip and whose width (b) defines the width of the passive strip waveguide, this waveguiding layer (wS) in the form of a strip being surrounded by the uniform material of the substrate (S), or this waveguiding layer (wS) in the form of a strip and the substrate (S) being bordered by air or another uniform material.

4. Directional coupler according to Claim 1, characterized in that a strip waveguide structure which is free from pn and pin junctions is defined by a rib (R2) which forms a thicker region of a further layer (aS) made of a uniform material and arranged on or above the waveguiding layer (wS), the width (b) of which rib determines the width of the passive strip waveguide, the further layer (aS) bordering on air or another uniform material at a top side (OW) facing away from the waveguiding layer (wS).

## Revendications

1. Coupleur directif optique intégré commandable constitué de deux guides (WL1, WL2) d'ondes à ruban, qui sont intégrés à un substrat (S) en matériau de semi-conducteur, qui sont définis par une couche non dopée (wS) ou de dopage n et guidant les ondes, du substrat (S), qui ont une largeur définie (b) et qui s'étendent l'un à côté de l'autre dans un tronçon (K) de couplage à une distance (d) si petite, que dans ce tronçon (K) de couplage une onde optique guidée dans la couche (wS), guidant les ondes, d'un (WL1) des guides d'ondes à ruban puisse surcoupler dans la couche (wS), guidant les ondes, de l'autre guide (WL2 ou WL1) d'ondes à ruban, au moins l'un des guides d'ondes à ruban (WL1, WL2) comportant dans le tronçon (K) de couplage une nervure (R) disposée au-dessus de la couche (wS) guidant les ondes, définissant sa largeur (b) et constituée du matériau de semiconducteur, une jonction pn ou pin commandable électriquement par des contacts étant intégrée au tronçon (K) de couplage dans la zone de la nervure (R) au-dessus ou en-dessous de la couche (wS) guidant les ondes, de telle sorte que la jonction (Ü) en matériau de dopage p en direction du matériau de dopage n ou non dopé soit disposée à une distance (D) de la couche (wS) guidant les ondes et que le matériau de dopage p se trouve sur la face de cette jonction (Ü), qui est éloigné de cette couche (wS), chacun des tronçons (dans B1) des guides d'ondes à ruban, qui comportent une jonction pn ou pin commandable électriquement formant un guide d'ondes à ruban commandable électriquement et chaque tronçon (dans B2) des guides d'ondes à ruban ou chaque guide d'ondes à ruban, qui se trouve en dehors du guide d'ondes à ruban commandable électriquement, formant un guide d'ondes à ruban passif, caractérisé en ce que la jonction pn ou pin est limitée au guide d'ondes à ruban commandable électriquement de sorte qu'un guide d'ondes à ruban passif ait une structure de guide d'ondes à ruban sans jonction pn ni pin.

2. Coupleur directif suivant la revendication 1, caractérisé en ce qu'une structure de guide d'ondes à ruban sans jonction pn ni pin est définie par une nervure (R1), qui forme une zone plus épaisse de la couche (wS) guidant les ondes et en le matériau semi-conducteur de dopage n ou non dopé et dont la largeur (b) détermine la largeur du guide d'ondes à ruban passif (WL1, WL2), la couche (wS) guidant les ondes par une face (O) éloignée du substrat (S) étant en interface avec de l'air ou avec un autre matériau homogène.

3. Coupleur directif suivant la revendication 1, caractérisé en ce qu'une structure de guide d'ondes à ruban sans jonction pn ni pin comporte une couche (wS) guidant les ondes et en forme de bande, dont la largeur (b) définit la largeur du guide d'ondes à ruban passif, cette couche (wS) guidant les ondes en forme de bande étant entourée du matériau homogène du substrat (S) ou étant en interface avec cette couche (wS) guidant les ondes et en forme de bande et le substrat (S) étant en interface avec de l'air ou avec un autre matériau homogène.

4. Coupleur directif suivant la revendication 1, caractérisé en ce qu'une structure de guide d'ondes à ruban sans jonction pn ni pin est définie par une nervure (R2), qui forme une zone plus épaisse d'une autre couche (aS) disposée sur ou au-dessus de la couche (wS) guidant les ondes et en un matériau homogène et dont la largeur (b) détermine la largeur du guide d'ondes à ruban passif, l'autre couche (aS) étant en interface par une face supérieure (OW) éloignée de la couche (wS) guidant les ondes, avec de l'air ou avec un autre matériau homogène.
